# EUROPEAN PATENT APPLICATION

(11) **EP 2 777 803 A1**
(43) Date of publication of application: **17.09.2014**
(21) Application number: 13159523.3
(22) Date of filing: 15.03.2013
(51) Int. Cl.: B01D 65/02

(54) **System for cleaning a membrane**

(71) Applicant: KSM Water GmbH, 38820 Halberstadt (DE)
(72) Inventor: Zuback, Joseph E., Carmarillo, CA 93012 (US)
(74) Representative: DREISS Patentanwälte PartG mbB

(57) **Abstract**

A system (100) for cleaning a membrane (122) includes at least one of a ceramic or polymeric membrane (122) for filtering solids from fluid in a filtration system, the membrane (122) having a clean side and a dirty side. The system further comprises at least a first supply of high pressure fluid (132) with dissolved gas therein. The first supply of high pressure fluid (132) is in fluid communication with the clean side of the membrane (122) during a cleaning process. The dissolved gas in the high pressure fluid (132) is at a concentration such that gas bubbles form on the dirty side of the membrane (122) during the cleaning process, wherein dissolved gas includes a first gas and the first gas is an oxidative gas.

## Description

### TECHNICAL FIELD

The invention relates to a system for cleaning a membrane of a filtration system and a method for cleaning a membrane of a filtration system.

### TECHNICAL BACKGROUND

Filtration systems are useful for filtering dirt and particles from fluids, such as water, using for example membranes. Typically, raw fluid passes through pores of a filter, such as a membrane, and the fluid is filtered. During the filtration, particles accumulate on the membrane, which interferes with the efficiency of the filtration. Periodically, the membrane is replaced. Replacement of the membrane interferes with use of the filtration system, resulting from downtime during the replacement.

In order to reduce the need for replacement of the membrane, the membrane can be cleaned to extend the life of the membrane, for example by backwashing the membrane with the filtered fluid, as is proposed in EP 0 669 159 A1. However, there are shortcomings with such a process.

### SUMMARY

A system for cleaning a membrane includes a ceramic or polymeric membrane for filtering solids from fluid in a filtration system, the membrane having a clean side and a dirty side; the system further comprising at least a first supply of high pressure fluid with dissolved gas therein; the first supply of high pressure fluid being in fluid communication with the clean side of the membrane during a cleaning process; and the dissolved gas in the high pressure fluid being at a concentration such that gas releases, preferably in the form of bubbles, on the dirty side of the membrane during the cleaning process; wherein the dissolved gas includes a first gas and the first gas is an oxidative gas.

With the invention, the gas acts exactly where the dirt is located, that is on the dirty side of the membrane. The reason is that the concentration of the dissolved gas in the high pressure fluid is in excess of the maximum solubility of the dissolved gas at a dirty side operating pressure present during the cleaning process. During the cleaning process the pressure of the fluid drops to the dirty side operating pressure when it penetrates through the membrane from the clean side to the dirty side, the dirty side operating pressure being below the maximum solubility of the dissolved gas in the fluid. If bubbles are formed, they physically cooperate with the dirt on the dirty side of the membrane in that they attach to the dirt such that it floats away from the membrane, and/or help removing the dirt by adding a scouring function to the fluid flow. Since the gas is an oxidative gas, it chemically interacts with organic foulants that gradually attach to the dirty side of the membrane during the treatment process and that negatively impact membrane performance and in that the gas oxidizes the foulants, which may help to dissolve and/or detach the foulant from the membrane.

Thus, the inventive system provides for an improved cleaning performance, which leads to improved filtering characteristics during normal filtering operation of the membrane.

In one or more embodiments, the system further comprises a source of cleaning reagent being selected to physically or chemically coact with the dirt accumulated at the membrane during the cleaning process. This embodiment provides for a combination of a chemical component that could be an oxidizing chemical such as ozone, sodium hypochlorite, peroxide, etc., with pressurized water containing dissolved gas such as air such that the chemicals react with the dirt at approximately the same time as the bubbles form. In one or more embodiments, the cleaning reagent and the gas may be the same. The bubbles serve a scouring function to remove dirt that has been "loosened" or via reaction with the chemical component. The chemical component could be a combination of chemicals such as sodium hypochlorite plus carbon dioxide, which reduces pH and increases the oxidation potential.

In one or more embodiments, the first supply of high pressure fluid includes at least one of pressurized gas with ozone therein or fluid with pressurized and ionized gas.

In one or more embodiments, the system comprises a second supply of high pressure fluid being selectively in fluid communication with the membrane, the second supply of high pressure fluid having low concentration of dissolved gas therein. Thus, it is possible to at least partially replace fluid with a high concentration of dissolved gas inside the membrane with fluid with a low concentration of dissolved gas, which improves the filtering performance during normal operation, because the fluid having low concentration of dissolved gas helps to remove bubbles from the membrane.

In one or more embodiments, the first supply of high pressure fluid with dissolved gas has a dissolved gas concentration greater than about 50% of solubility at high pressure conditions.

In one or more embodiments, the system further comprises a separation tank, the separation tank being downstream of the membrane in a reverse flow path. The separation tank helps to separate the removed dirt from the water.

In one or more embodiments, the system further comprises a transition control allowing for transition from the first supply of high pressure fluid to the second supply of high pressure fluid.

A method includes dissolving an oxidative gas into a first fluid in a first vessel at a concentration in excess of the maximum solubility of the dissolved oxidative gas at an operating pressure present on a dirty side of the membrane during a cleaning process; during the cleaning process, supplying the first fluid to a clean side of the membrane, such that it passes through the membrane and oxidative gas releases, preferably in the form of bubbles, on the dirty side of the membrane.

The method may further include at least partially replacing fluid inside the membrane with fluid from a second supply of high pressure fluid with a low concentration of dissolved gas.

The method may include the step of pressurizing the first fluid and/or the second fluid, respectively.

A system includes a membrane within a membrane module, the membrane has a clean side and a dirty side, where the membrane is configured for filtering solids from fluid in a filtration system. A first vessel has backflush fluid therein. A chemical feed source is fluidly coupled with the membrane module proximal to the clean side of the membrane. The system further includes a pretreatment tank having an inlet fluidly coupled with a raw fluid source, the pretreatment tank having a second inlet fluidly coupled with the membrane module near the dirty side to receive chemically treated backflush fluid therefrom.

A system includes a membrane within a first membrane module. The membrane has a clean side and a dirty side, and the membrane is configured for filtering solids from fluid in a filtration system. A first vessel has one of: fluid including pressurized gas with ozone therein, fluid containing ozone at atmospheric pressure conditions, or fluid with pressurized and ionized gas. The first vessel is in fluid communication with the membrane module. The system further includes a pretreatment tank that has an inlet fluidly coupled with a raw fluid source, and a second inlet fluidly coupled with the membrane module near the dirty side to receive ozonized or ionized backflush fluid therefrom.

In one or more embodiments, the method further includes delivering first fluid with released gas to a pre-microflocculation tank, following a backwash process operation to remove most of the accumulated solids within the membrane module. The membrane is backwashed with pressurized water containing dissolved ozone, or fluid, such as water, containing ozone in the fluid under atmospheric pressure conditions. The ozone first reacts with organic material inside the membrane module, and then when mixed with the raw water feed in the tank, microflocculation is induced, which reduces or eliminates the need for coagulants. The blended resulting fluid in the tank can then be filtered.

In one or more embodiments, a method includes water backwashing a membrane module with a membrane therein, backwashing the membrane with water containing one or more of dissolved chemical reagent, ozone, or dissolved ozone, mixing the water containing one or more of dissolved chemical reagent, ozone, or dissolved ozone, with a raw water feed in a pretreatment blend tank, filtering fluid from the pretreatment blend tank. Optionally, the water containing dissolved ozone is pressurized. Microflocculation is induced in the pretreatment tank, which reduces or eliminates the need for coagulants. The blended resulting fluid in the tank can then be filtered.

In one or more embodiments, a filtration system comprises a membrane having a clean side and a dirty side, and the filtration system has a normal filtration path and a reverse cleaning path. Filtrate accumulates on the dirty side of the membrane during the normal filtration path. The system further includes a first vessel having a first supply of high pressure fluid with dissolved gas therein, a second vessel having a second supply of high pressure fluid with a low concentration of dissolved gas therein, a discharge pressure control member operatively coupled with the first vessel, the discharge pressure control member configured to release the dissolved gas from the first supply at the dirty side of the membrane.

Various embodiments further include the first supply of high pressure fluid with dissolved gas having a dissolved gas concentration greater than about 50% of solubility at high pressure conditions.

In another embodiment, the system further includes a separation tank, the separation tank downstream of the membrane in a reverse flow path, or a source of cleaning reagents fluidly coupled with the membrane, a transition control allowing for transition from the first supply of high pressure fluid to the second supply of high pressure fluid, the transition control upstream of the membrane in the reverse flow path.

In one or more embodiments, a method includes flushing a membrane with pressurized fluid containing dissolved gas from a first supply of high pressure fluid, the membrane having a first side and a second side, releasing the gas from the pressurized fluid at the second side of the membrane, cleaning the membrane with bubbles released from the gas, and replacing fluid inside the membrane with pressurized fluid from a second supply of high pressure fluid with a low concentration of dissolved gas.

In various embodiments of the method, the method further includes introducing liquid chemical cleaning reagents to the membrane, introducing one or more chemical cleaning reagents including hydrogen peroxide, acid, caustic, sodium hypochlorite into the first or second supply, sending fluid used to clean the membrane into a separation tank, floating dirt in the separation tank with the bubbles, or skimming and removing accumulated parties from a top portion of the separation tank. In an option, cleaning the membrane with the bubbles includes floating dirt away from the membrane with the bubbles. In one or more embodiments, releasing the gas from the pressurized fluid includes controlling discharge pressure of the first supply of high pressure fluid. The method further optionally includes introducing ozone into at least one of the first supply or second supply of high pressure fluid.

In another embodiment, a method includes introducing a first pressurized fluid with dissolved gas upstream of a membrane, flowing the first pressurized fluid with dissolved gas through the membrane, reducing pressure on the first pressurized fluid with dissolved gas downstream of the membrane and releasing bubbles of gas from the pressurized fluid, cleaning the membrane with the bubbles.

In an option, the method further includes introducing one or more of low pressure ozone or ionized air, or pressurized gas with ozone to the membrane.

In one or more embodiments, a system includes a membrane within a membrane module, the membrane having a clean side and a dirty side, the membrane configured for filtering solids from fluid in a filtration system, a first vessel having backflush fluid therein, a chemical feed source fluidly coupled with the membrane module proximal to the clean side of the membrane, a pretreatment tank having an inlet fluidly coupled with a raw fluid source, the pretreatment tank having a second inlet fluidly coupled with the membrane module near the dirty side to receive chemically treated backflush fluid therefrom.

In one or more embodiments, a system includes a membrane within a first membrane module, the membrane having a clean side and a dirty side, the membrane for filtering solids from fluid in a filtration system, a first vessel having one of fluid including pressurized gas with ozone therein or fluid containing ozone at atmospheric pressure conditions, or fluid with pressurized and ionized gas, the first vessel in fluid communication with the membrane module, a pretreatment tank having an inlet fluidly coupled with a raw fluid source, the pretreatment tank having a second inlet fluidly coupled with the membrane module near the dirty side to receive ozonized or ionized backflush fluid therefrom.

The system includes various embodiments, for instance, the ozone cleans the dirty side of the membrane. In one or more embodiments, the system further includes a pressurized ozone generator coupled with a first vessel, or one or more filtering membrane modules fluidly coupled with an outlet of the pretreatment tank. In an option, the first vessel is coupled proximal to a clean side of the membrane.

In one or more embodiments, a method includes dissolving gas into a first fluid in a first vessel, delivering the first fluid to a membrane module including a membrane, the membrane having a clean side and a dirty side, and releasing gas from fluid to clean the dirty side of the membrane.

In various embodiments, dissolving gas includes delivering ionized gas from a generator to a gas compressor, and delivering the compressed gas to the first vessel, or dissolving gas includes delivering pressurized ozone from a generator to a gas compressor, and delivering the compressed ozone to the fluid of the first vessel. In one or more embodiments, the method further includes delivering a second fluid with substantially low dissolved gas to the membrane module and displacing the first fluid, delivering fluid with released gas to a pre-microflocculation tank, inputting raw water feed to the tank and including microflocculation, filtering the fluid from the tank, or backwashing the membrane module with water prior to delivering the first fluid to the membrane.

In one or more embodiments, a method includes water backwashing a membrane module with a membrane therein, backwashing the membrane with water containing one or more of dissolved chemical reagent, ozone, or dissolved ozone, mixing the water with a raw water feed in a pretreatment blend tank, and filtering fluid from the pretreatment blend tank.

These and other embodiments, aspects, advantages, and features of the present invention will be set forth in part in the description which follows, and will become apparent to those skilled in the art by reference to the following description of the invention and referenced drawings or by practice of the invention. The aspects, advantages, and features of the invention are realized and attained by means of the instrumentalities, procedures, and combinations particularly pointed out in the appended claims and their equivalents.

### BRIEF DESCRIPTION OF THE FIGURES

FIG. 1 is a block diagram of a portion of a system according to one or more embodiments.
FIG. 2 is a block diagram of a portion of a system according to one or more embodiments.
FIG. 3 is a block diagram of a sequence for dissolving gas under pressure according to one or more embodiments.
FIG. 4 is a block diagram of the system according to one or more embodiments.
FIG. 5 is a block diagram of the system according to one or more embodiments.
FIG. 6 is a block diagram of the system according to one or more embodiments.
FIG. 7 is a block diagram of the system according to one or more embodiments.
FIG. 8 is a block diagram of the system according to one or more embodiments.
FIG. 9 is a block diagram of the system according to one or more embodiments.
FIG. 10 is a block diagram of the system according to one or more embodiments.
FIG. 11A is a block diagram of the system according to one or more embodiments.
FIG. 11B is a block diagram of the system according to one or more embodiments.
FIG. 12 is a block diagram of the system according to one or more embodiments.
FIG. 13 is a block diagram of the system according to one or more embodiments.
FIG. 14 is a block diagram of the system according to one or more embodiments.
FIG. 15 is a block diagram of the system according to one or more embodiments.

### DETAILED DESCRIPTION

The following detailed description includes references to the accompanying drawings, which form a part of the detailed description. The drawings show, by way of illustration, specific embodiments in which the apparatus may be practiced. These embodiments, which are also referred to herein as "examples" or "options," are described in enough detail to enable those skilled in the art to practice the present embodiments. The embodiments may be combined, other embodiments may be utilized or structural or logical changes may be made without departing from the scope of the invention. The following detailed description is, therefore, not to be taken in a limiting sense and the scope of the invention is defined by the appended claims and their legal equivalents.

In this document, the terms "a" or "an" are used to include one or more than one, and the term "or" is used to refer to a nonexclusive "or" unless otherwise indicated. In addition, it is to be understood that the phraseology or terminology employed herein, and not otherwise defined, is for the purpose of description only and not of limitation.

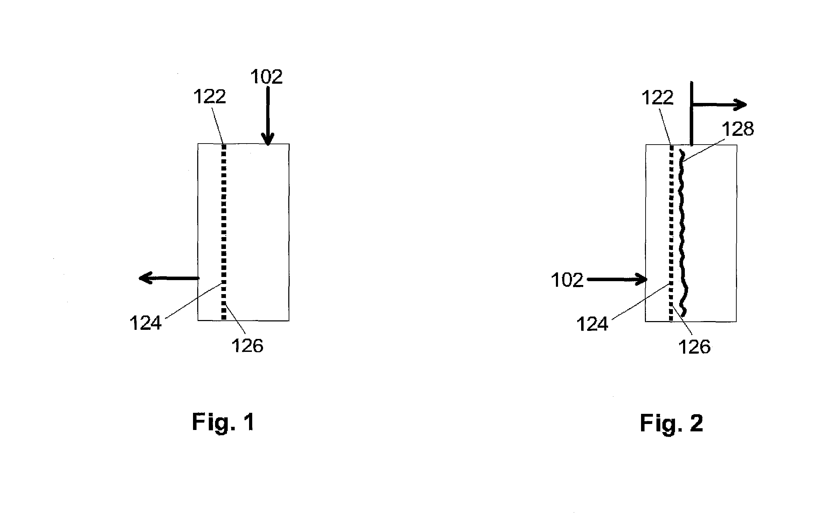

A filtration system includes a filtration member, such as a membrane 122, including a ceramic membrane or a polymeric membrane. During a normal filtration flow path 102, as shown in FIG. 1, dirty fluid, such as water, flows through the membrane 122, and dirt is collected on the membrane. Referring to FIG. 2, the membrane has a clean side 124 and a dirty side 126, where filtrate 128 accumulates on the dirty side of the membrane during the normal filtration path 102. To wash the membrane, the direction of the flow is reversed in a reverse flow path 104, as shown in FIG. 2, where clean water is flowed through the membrane 122 and dirt or the filtrate 128 is removed from the membrane surface, which can include inside the pores of the membrane.

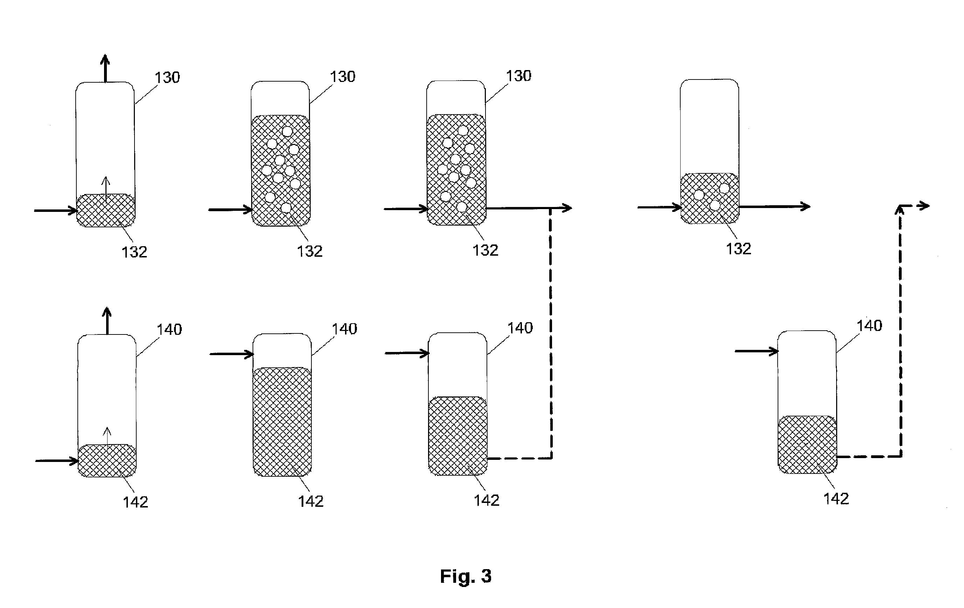

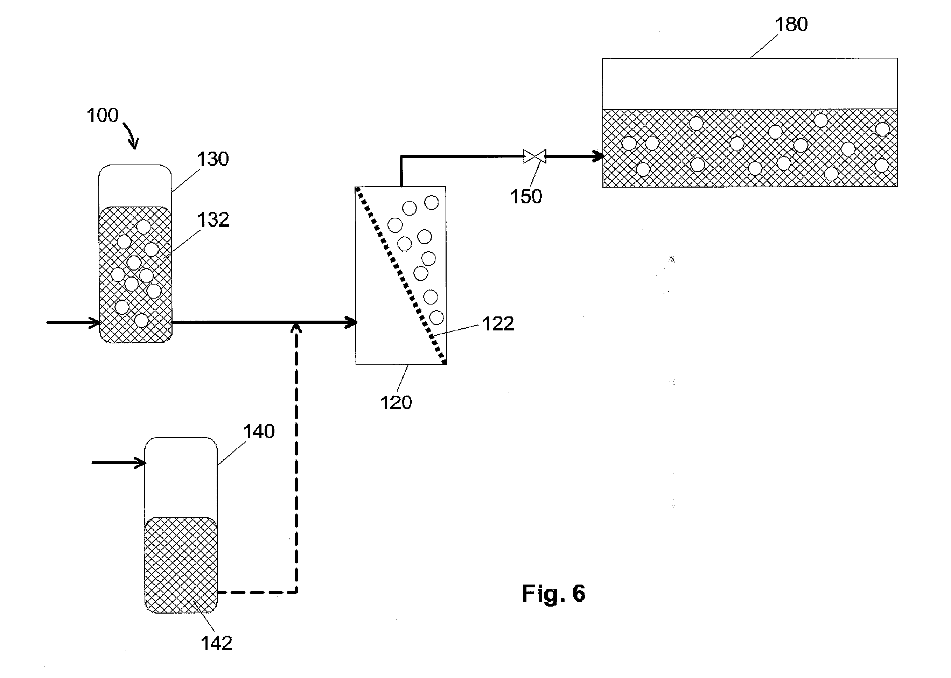

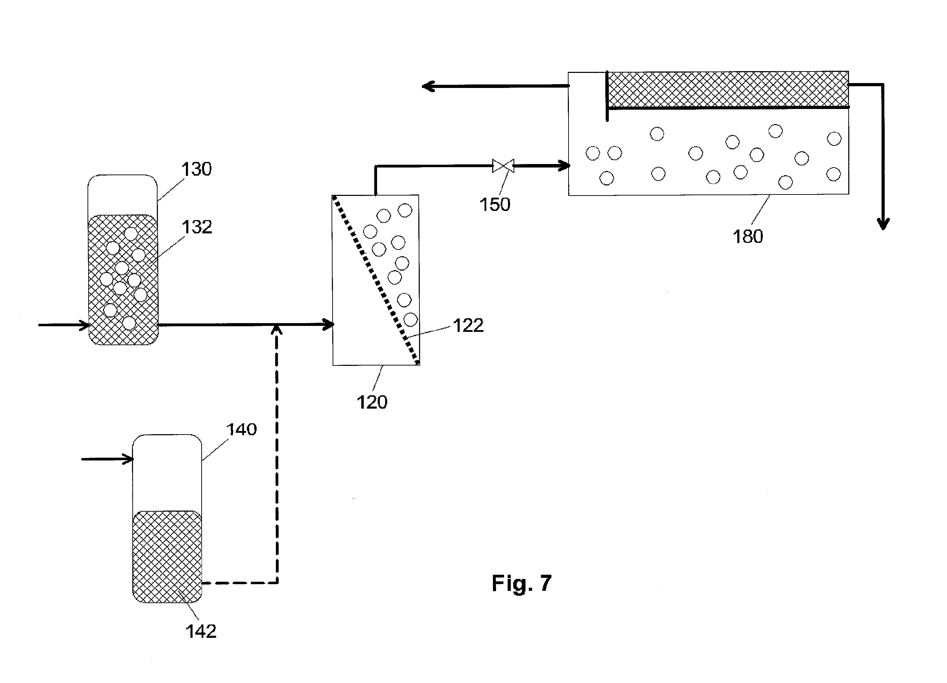

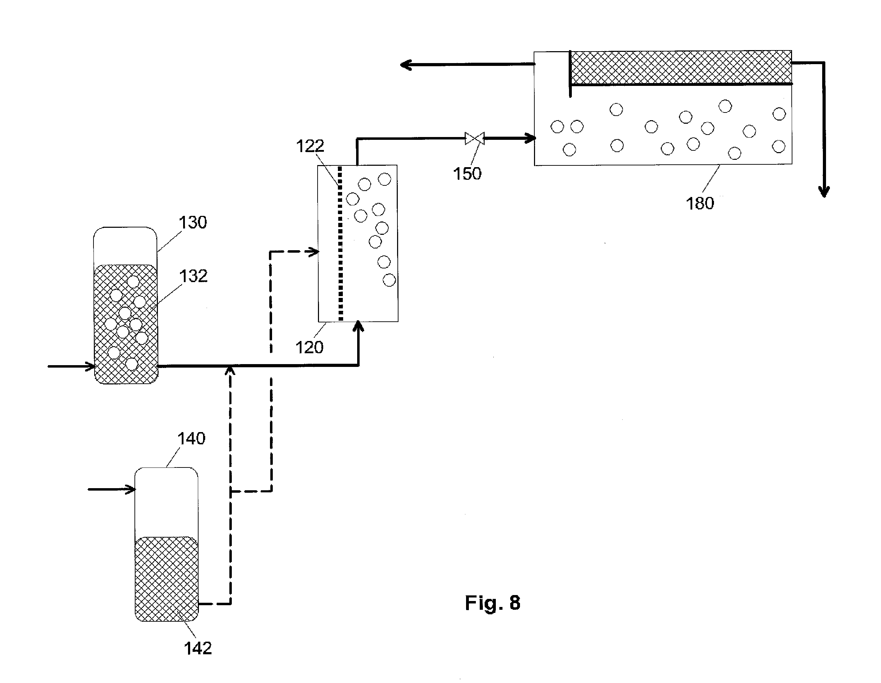

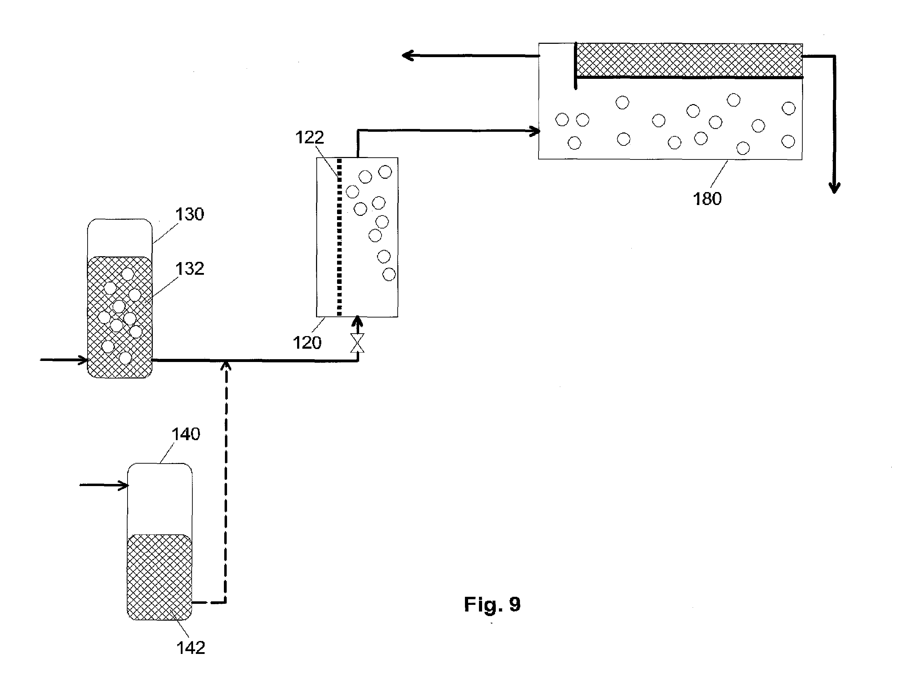

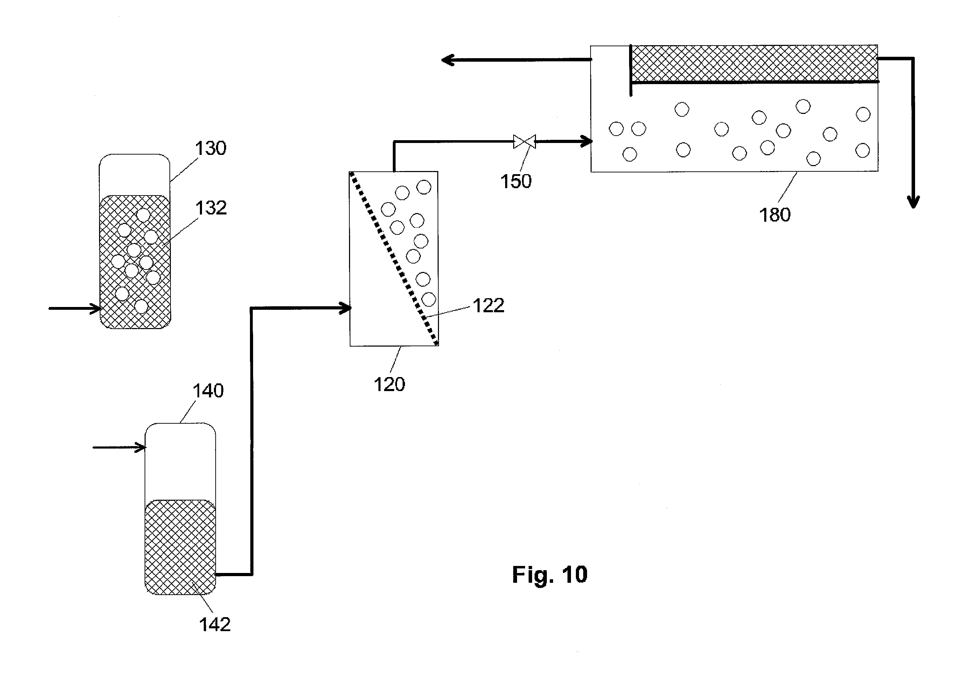

A system 100 is described herein for cleaning the membrane 122 of a filtration system. Referring to FIGs. 3 - 10, the system 100 includes at least one membrane module 120 having a membrane 122, a first vessel 130, such as a tank, and an optional second vessel 140. The modules herein are able to be removed from filtration service collectively, or individually, i.e. each module has a turn of being cleaned.

For one or more modules, the cleaning process occurs over a set duration, for example 30 minutes, and a set frequency, for example once after a set period of filtration time and/or an operating pressure drop reaches a certain limit.

The first vessel 130 is fluidly coupled with the membrane module 120. The first vessel 130 provides a supply of high pressure fluid 132, such as water, that includes dissolved oxidative gas, such as ozone. Other suitable fluids include, but are not limited to petroleum products and vegetable oils. Other suitable oxidative gasses include, but are not limited to any oxidative gas produced by converting a portion of oxygen present in air or pure oxygen to ozone or any gas mixed with ozone generated from air or oxygen or with halogen gasses such as chlorine, bromine, and iodine. The first vessel 130 pressurizes the fluid to high pressures of 2 bar - 9 bar and/or can receive high pressurize fluid with high pressures of 2 bar - 9 bar. The dissolved gas concentration, in an embodiment, is greater than 50% gas solubility at the high pressure conditions.

The first vessel 130 is fluidly coupled with the membrane module 120, and a valve 158 is between the first vessel 130 and the membrane module to control flow of fluid 132 therebetween. In an embodiment, a release of the dissolved oxidative gas is used to clean the membrane 122 during a reverse flow process. In an embodiment, the system 100 includes discharge pressure control 150, such as a valve, operatively coupled with the first supply of high pressure fluid 132. In one or more embodiments, the discharge pressure control 150 is downstream of the membrane 122 during the reverse flow process. When the discharge pressure control 150 is open, the pressure is reduced on the first supply of fluid 132, and the oxidative gas is released near a dirty side of the membrane 122, allowing for the released oxidative gas to clean the membrane 122. For example, fluid 132 flows from the clean side 124 of the membrane 122 to the dirty side 126 of the membrane 122, bubbles are released and scour a dirty surface of the membrane 122.

The second supply of pressurized fluid 142 is in the second vessel 140 which is in fluid communication with the membrane 122. The second supply of pressurized fluid 142 can be provided upstream from the membrane 122 in the reverse flow path 104, and/or at the membrane 122. In another embodiment, the second supply of fluid 142 can be provided at the dirty side of the membrane 122. The second vessel 140 pressurizes the fluid 142 to high pressures of 2 bar - 9 bar and/or can receive high pressurized fluid with high pressures of 2 bar - 9 bar. The second supply of pressurized fluid 142 has a low concentration of dissolved gas therein. The concentration of dissolved gas is in the range of 0 - 5% solubility. The second supply of pressured fluid 142 is used to displace the first supply of fluid 132. In one or more embodiments, a transition control is coupled with the supply line, allowing for transition from the first supply of high pressure fluid 132 to the second supply of high pressure fluid.

The system 100 further includes a separation tank 180 in one or more embodiments. The separation tank 180 is downstream of the membrane 122 during the reserve flow process, for example, and is used to receive the dirty fluid from the cleaning process, and to separate solids from the fluid. In a further embodiment, bubbles of oxidative gas released from the first supply of fluid 132 are used to float dirt, oil, and other water immiscible fluids near a top portion of the separation tank. In one or more embodiments, a skimmer is provided to remove floatable solids and liquids from a top portion or a top surface of the separation tank.

In one or more embodiments, a source of cleaning reagents is fluidly coupled with the membrane, and can be released before, during, or after the backflow cleaning process. For example, liquid chemical cleaning reagents are introduced to the membrane. The one or more chemical cleaning reagents include, but are not limited to ozone, hydrogen peroxide, mixtures of oxidizing chemicals produced from electrolytic processes, acid, caustic, sodium hypochlorite into the first or second supply.

Methods of using the system 100, and several variations, are shown in FIGs. 3 - 10. The method includes filling the first vessel 130 with a first supply of pressurized fluid, such as water. The fluid can be pressurized before, during, or after the filling of the first vessel 130 with the fluid. As the fluid, such as a filtrate, is introduced into the vessel 130, the gas in the vessel 130 is vented. The vessel 130 is closed, and pressurized oxidative gas is introduced. The fluid is at a high pressure in a range of about 2 bar - 9 bar. Dissolved oxidative gas is provided in the first supply of fluid. The dissolved oxidative gas concentration, in an embodiment, is greater than 50% oxidative gas solubility at the high pressure conditions, where the high pressure conditions are in the range of 2 bar - 9 bar.

The first supply of fluid travels to the membrane module and is used to clean the membrane. The first supply of fluid travels, in an option, from the clean side 124 of the membrane 122 to a dirty side 126 of the membrane 122. The dissolved oxidative gas, in an option, is released such that the bubbles are released on the dirty side of the membrane. In an embodiment, the dissolved oxidative gas is released from the pressurized fluid and the bubbles are used to scour a surface of the membrane. In another option, the bubbles float dirt particles from a portion of the membrane, such as a surface of the membrane.

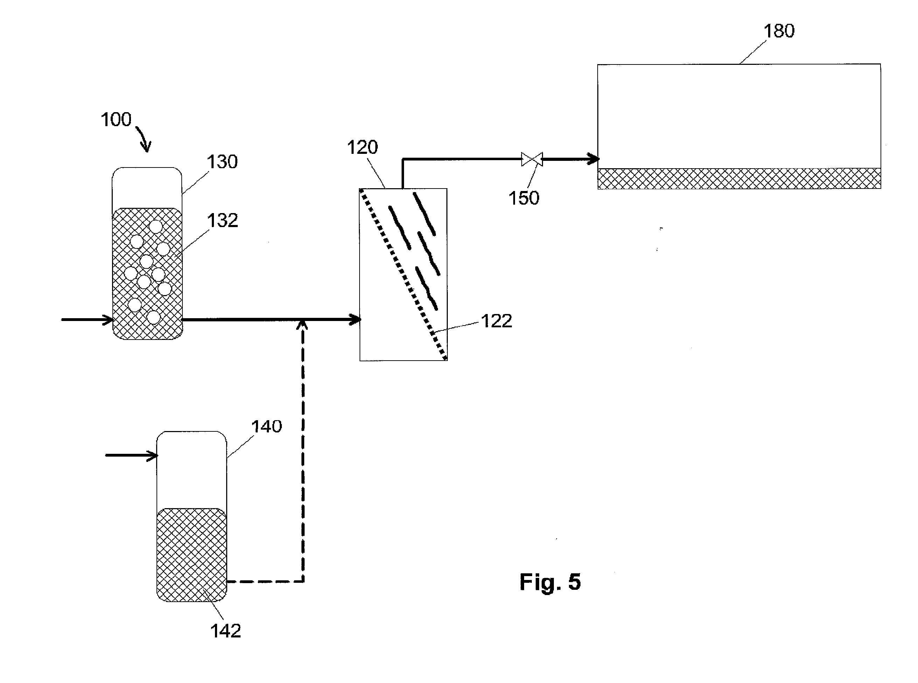

In a further embodiment, the method includes various manners in which to release the oxidative gas from the fluid. In an embodiment pressure is managed with a pressure control member, such as a valve. The valve is, for example, downstream of the membrane module in the reverse flow path, as shown in FIG. 5. The valve is opened to reduce pressure, and the oxidative gas is released from the first supply of fluid. The pressure can be reduced to a range of 0 bar (full vacuum) to 2 bar (1 bar above standard atmospheric pressure).

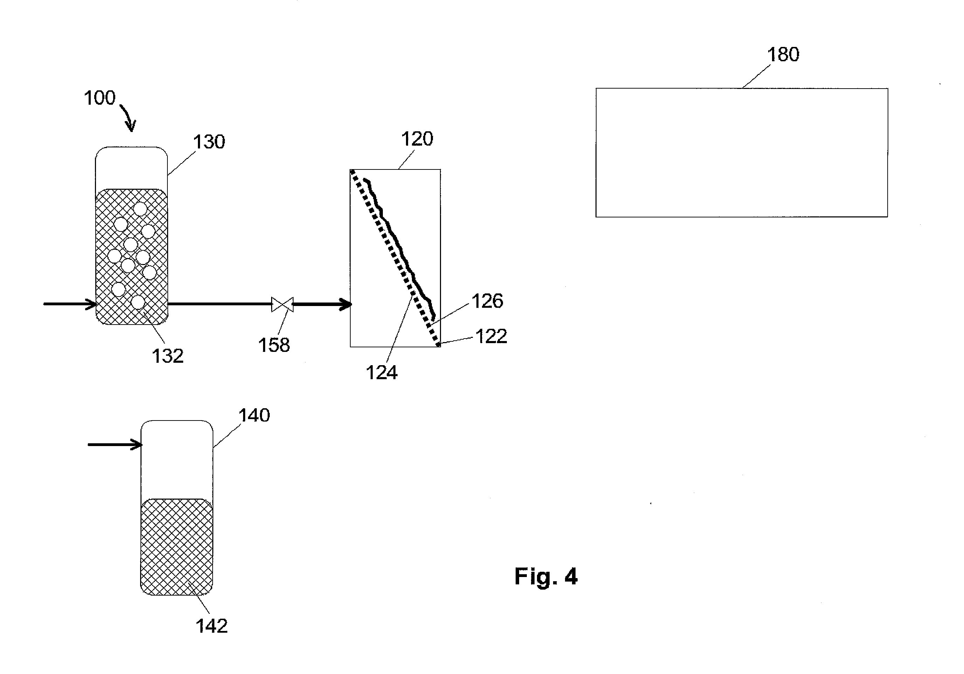

When the pressure is reduced, the dissolved oxidative gas is released from the fluid, and the bubbles are used to clean the membrane. The dirt and fluid travel, in another embodiment, to a solids separation tank, as shown in FIG. 4. The solids can settle in a lower portion of the tank. In a further option, the bubbles bring dirt to an upper portion of the tank, and a mechanical skimming device can be used, optionally, to further remove dirty particles from the tank, as shown in FIG. 5. In a further option, the clarified water from the separation tank is recycled to go through the filtration system in the normal flow path 102 (FIG. 1, 7 - 10).

In one or more embodiments, cleaning reagents can be introduced to the membrane. For example, liquid chemical cleaning reagents are introduced to the membrane. The one or more chemical cleaning reagents include, but are not limited to ozone, mixtures of oxidizing chemicals produced from electrolytic processes, hydrogen peroxide, acid, caustic, or sodium hypochlorite into the first or second supply.

In another embodiment, a second vessel provides a second supply of pressurized fluid. The fluid can be pressurized before, during or after the filling of the second vessel. The second supply of fluid includes low concentrations of dissolved gas therein. For example, the second supply of pressurized fluid includes substantially no dissolved gas therein. In another option, the second supply of pressurized fluid includes less than 5% of dissolved gas therein. The second supply of fluid, such as water, is used to displace the first supply of water. The second supply of fluid, in an embodiment, can be provided at about the same time the first supply of water is released through the membrane. In another embodiment, the second supply of fluid is provided after the first supply of water is released through the membrane. The second supply of water can be provided in the path upstream of the membrane in the reverse flow path, or in another embodiment, downstream of the membrane in the reverse flow path, or both. The second supply of water, in one or more embodiments, can be provided with cleaning reagents and/or ozone. In one or more embodiments, the method includes introducing a feed of coagulant chemicals including one or more of inorganic salts, organic polyelectrolyte chemicals. After or during the cleaning process, the first supply and/or the second supply of fluid used to clean the membrane can be recycled through the system and filtered during a normal flow process.

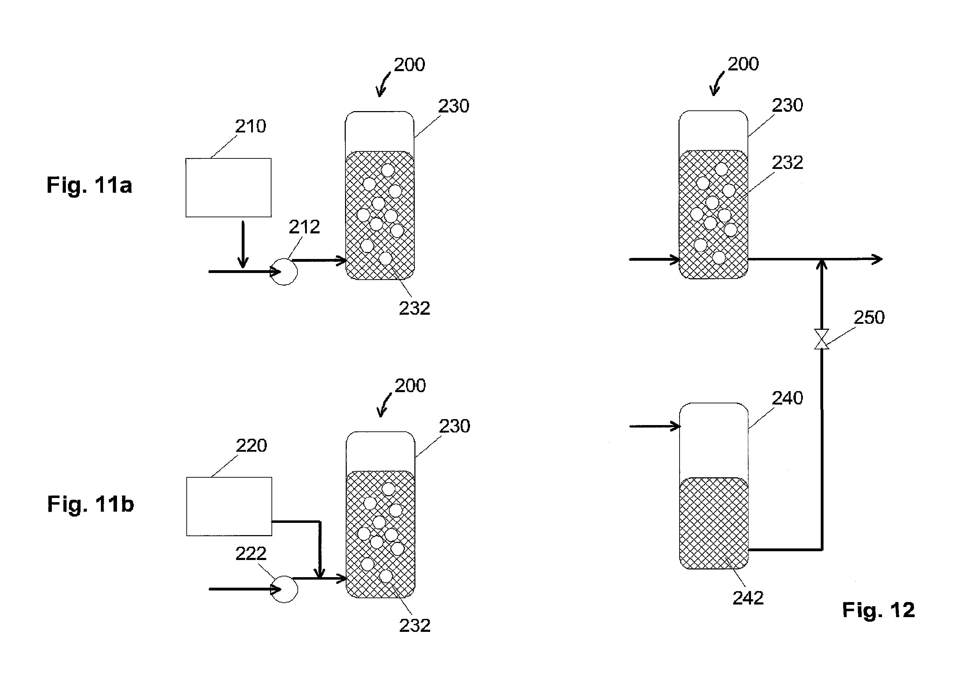

Referring to FIGs. 11A - 15, one or more embodiments are illustrated. In FIG. 11A, a system 200 incorporates the various embodiments of backwash cleaning system 100 discussed above. In an option, the system 200 further includes an ionized air generator 210 in communication with a gas compressor 212. The gas compressor 212 compresses the ionized air and delivers it to a first vessel 230 as a dissolved oxidative gas in the fluid 232. The first vessel 230 is in fluid communication with the membrane such that dissolved oxidative gas travels to the membrane, and the bubbles are released on or within the membrane or on a dirty side of the membrane to scour and clean the membrane, as further discussed above. The vessel 230, in an option, includes backflush fluid therein from a backflush process. In a further option, a second vessel of high pressure fluid with no or substantially low concentrations of dissolved gas therein can be provided with the system 200.

In another embodiment, as shown in FIG. 11B, a system 200 incorporates the various embodiments of backwash cleaning system 100 discussed above. In an option, the system 200 further includes a pressurized ozone generator 220 in communication with a gas compressor 222. The gas compressor 222 compresses the ozone and delivers it to a first vessel 230 as a dissolved oxidative gas in the fluid 232 The first vessel 230 is in fluid communication with the membrane such that dissolved oxidative gas travels to the membrane, and the bubbles are released on or within the membrane or on a dirty side of the membrane to scour and clean the membrane, as further discussed above. The vessel 230, in an option, includes backflush fluid therein, from a backflush process. In a further option, a second vessel of high pressure fluid with no or substantially low concentrations of dissolved gas therein can be provided with the system 200. In a further option, a gas compressor is provided which compresses air prior to the ozone generator, which operates at sufficient pressure such that the ozonated gas can be introduced directly to the membrane at the desired pressure.

FIG. 12 illustrates another option, including a system 200 with a pressurized first vessel 230 having pressurized fluid with dissolved oxidative gas therein 232, and a second vessel 240 of high pressure fluid with no or substantially low concentrations of dissolved gas therein 242. The first and second vessels 230, 240 are fluidly coupled with a membrane and are used to clean a membrane. For example, during a backwash cleaning operation, the fluid 232 is sent to the membrane while maintaining the high pressure to prevent the dissolved oxidative gas from escaping from the fluid. The pressure is lower on the dirty side of the membrane, allowing the bubbles to release from the fluid and scour a dirty side of the membrane. During or after the cleaning, the fluid 242 is delivered from the second vessel 230 to displace the fluid 232. The embodiment of FIG. 12 further includes a source of low pressure ozone and/or ionized air. The embodiment further includes a venturi eductor 250 to introduce the ozone or ionized air into the fluid line between the second vessel 240 and the membrane. The ozonated and/or ionized air in water is used to backwash the membrane, with the resultant wastewater containing residual ozone and/or ionized air in order to provide microflocculation, oxidation, or disinfection benefits. The ozone can be generated from, for example, air, oxygen, or water.

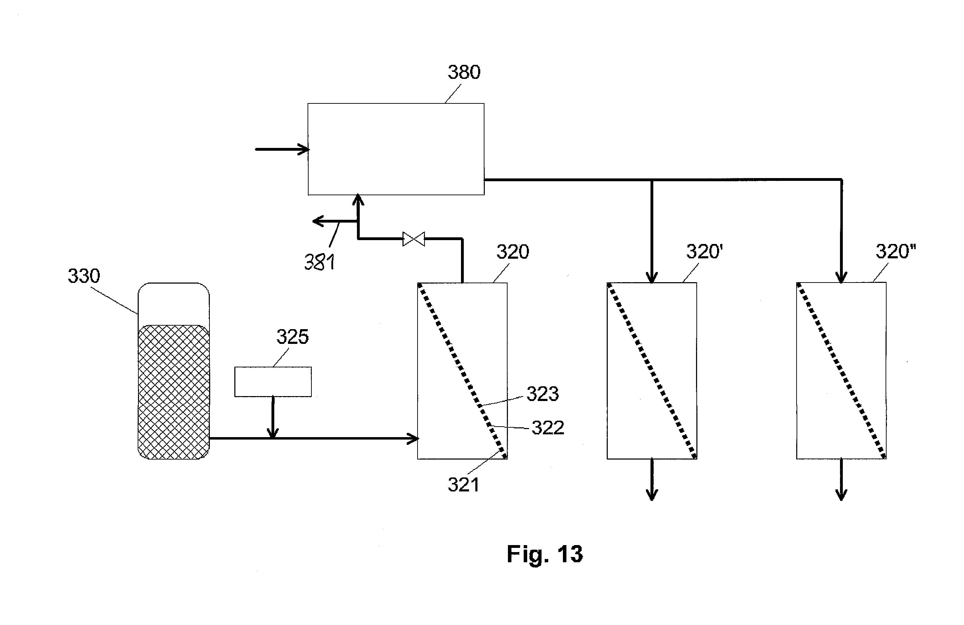

FIG. 13 illustrates another embodiment which further includes integrated chemically enhanced backwash and feedwater pretreatment. The system 300 includes a vessel 330 with a back flush fluid source that is fluidly coupled with a membrane module 320, such as a ceramic module, having a membrane 322 therein. The membrane 322 has a clean side 321 and a dirty side 323. In addition, a source of chemicals, 325, or a chemical feed, is fluidly coupled with the membrane module 320. After the membrane-cleaning backwash process, the chemically treated back flush water is delivered to a pretreatment blend tank 380, and the blend tank 380 also receives a raw water feed, creating a blend of raw water feed and chemically treated back flush wastewater.

During use, following a back flush cleaning process, for example, with water only, most of accumulated solids within the membrane module 320, the membrane 322 is backwashed with fluid containing a dissolved chemical reagent in the fluid. The reagent reacts with organic or inorganic material inside the membrane module, and is then mixed with the raw water feed to induce microflocculation and/or pH adjustment. Once the feeds have been blended in the tank 380, the fluids can be sent to membrane modules 320' and 320" to obtain filtered fluid, such as filtered water. The modules herein are able to be removed from filtration service collectively, or individually, i.e. each module has a turn of being cleaned. For one or more modules, the cleaning process occurs over a set duration, for example 30 minutes, and a set frequency, for example once after a set period of filtration time and/or an operating pressure drop reaches a certain limit. In an example, before, during, or after membrane module 320 is removed from filtration service and is cleaned, modules 320, and 320" can be removed from filtration service to go through the cleaning process. In one or more embodiments, a constant ozone dose in the pre-microflocculation tank 380 from the backwash operation is desired, and at least one module would be in a backwash cleaning cycle to supply the ozone.

Under normal treatment circumstances with no microflocculation of raw water, the size of particles removed at the surface of membrane 322 are smaller which reduces the porosity and rate of water transport (aka flux) across the accumulated particles on the surface (called "dirt layer") of membrane 322. The microflocculation effect from recycling solids that have had a "chemical reagent" such as ozone added increases particle size and water transport rates through the dirt layer even though there is more dirt. The visual image is to imagine that the unflocculated dirt causes a dirt layer made up of fine powder that will restrict flow even in small amounts, but flocculation converts the fine powder into granules that offer less resistance to flow relative to the mass of material in a dirt layer. Of course, the solids eventually must be removed from this recirculating pattern, and thus there is provided a bleed connection indicated with 381 in figure 13.

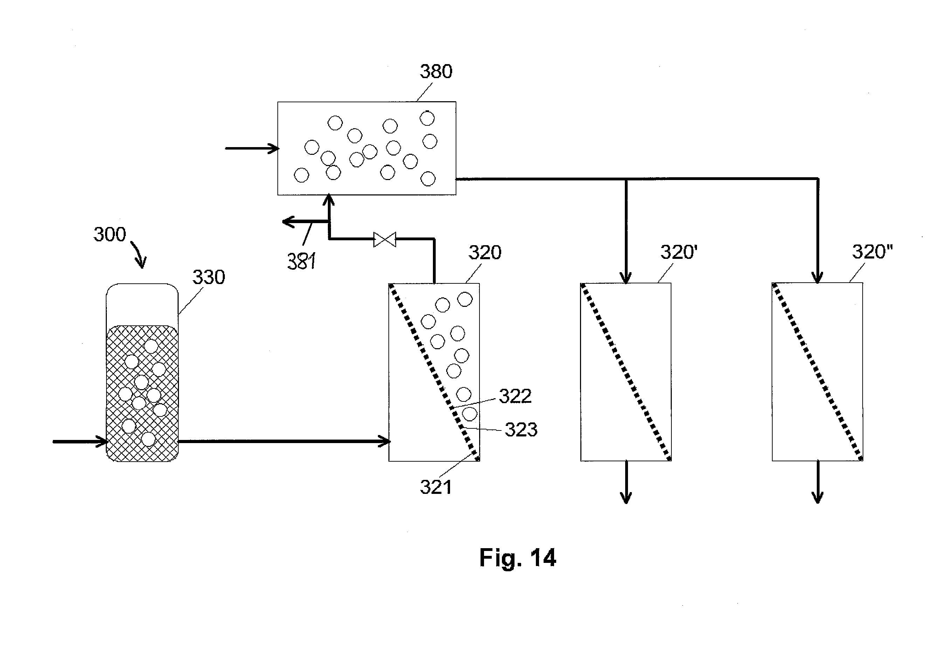

FIG. 14 illustrates another embodiment which further includes feedwater pretreatment. The system 300 includes a vessel 330 with a back flush fluid source that is fluidly coupled with a membrane module 320, such as a ceramic module, having a membrane 322 therein. The membrane 322 has a clean side 321 and a dirty side 323. The vessel 330 includes fluid that is pressurized, and includes pressurized gas with ozone. During the membrane-cleaning backwash process, the ozone treated back flush fluid is initially used to clean and scour a membrane 322, and then delivered to a pretreatment blend tank 380. The blend tank 380 also receives a raw water feed, creating a blend of raw water feed and ozone treated back flush wastewater.

During use, following a back flush cleaning process, for example, with water only, most of accumulated solids within the membrane module 320, the membrane 322 is backwashed with fluid containing ozone in the fluid. The ozone reacts with organic or inorganic material inside the membrane module, and is then mixed with the raw water feed to induce microflocculation and/or pH adjustment. Once with feeds have been blended in the tank 380, the fluids can be sent to membrane modules 320' 320" to obtain filtered fluid, such as filtered water.

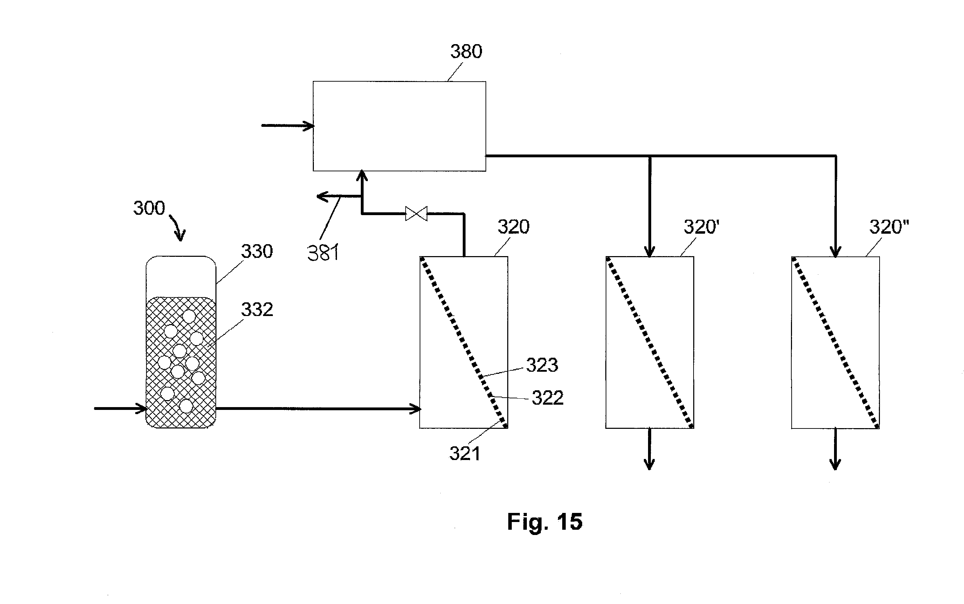

FIG. 15 illustrates another embodiment which further includes feedwater pretreatment with pressurized gas with ozone. The system 300 includes a vessel 330 with a pressurized fluid with ozone pressurized gas therein 332. The fluid 332 is fluidly coupled with a membrane module 320, such as a ceramic module, having a membrane 322 therein. The membrane 322 has a clean side 321 and a dirty side 323. The vessel 330 includes fluid that is pressurized, and includes pressurized gas with ozone. During the membrane-cleaning backwash process, the ozone treated back flush fluid is initially used to clean and scour a membrane 322, and then delivered to a pretreatment blend tank 380. The blend tank 380 also receives a raw water feed, creating a blend of raw water feed and ozone treated back flush wastewater.

During use, following a back flush cleaning process, for example, with water only, most of accumulated solids within the membrane module 320, the membrane 322 is backwashed with fluid containing ozone in the fluid. The ozone reacts with organic or inorganic material inside the membrane module, and is then mixed with the raw water feed to induce microflocculation that reduces or eliminates the need for coagulants. Once with feeds have been blended in the tank 380, the fluids can be sent to membrane modules 320' 320" to obtain filtered fluid, such as filtered water.

In one or more embodiments, a method includes dissolving oxidative gas, such as, but not limited to, low pressure ozone, ionized air, or pressurized gas with ozone, into a first fluid in a first vessel, delivering the fluid to a membrane module including a membrane, such as a ceramic membrane. The membrane has a clean side and a dirty side. The method further includes releasing oxidative gas from fluid to clean the dirty side of the membrane. Additional options include dissolving oxidative gas by delivering ionized gas from a generator to a gas compressor, and delivering the compressed oxidative gas to the first vessel, or delivering pressurized ozone from a generator to a gas compressor, and delivering the compressed ozone to the fluid of the first vessel. In one or more embodiments, the method further includes delivering a second fluid with substantially low dissolved gas to the membrane module and displacing the first fluid.

In one or more embodiments, the method further includes delivering first fluid with released oxidative gas to a pre-microflocculation tank, following a backwash process operation to remove most of the accumulated solids within the membrane module. The membrane is backwashed with pressurized water containing dissolved ozone, or fluid, such as water, containing ozone in the fluid under atmospheric pressure conditions. The ozone first reacts with organic material inside the membrane module, and then when mixed with the raw water feed in the tank, microflocculation is induced, which reduces or eliminates the need for coagulants. The blended resulting fluid in the tank can then be filtered. In one or more embodiments, a method includes water backwashing a membrane module with a membrane therein, backwashing the membrane with water containing one or more of dissolved chemical reagent, ozone, or dissolved ozone, mixing the water containing one or more of dissolved chemical reagent, ozone, or dissolved ozone, with a raw water feed in a pretreatment blend tank, filtering fluid from the pretreatment blend tank. Optionally, the water containing dissolved ozone is pressurized. Microflocculation is induced in the pretreatment tank, which reduces or eliminates the need for coagulants. The blended resulting fluid in the tank can then be filtered.

It is to be understood that the above description is intended to be illustrative, and not restrictive. Many other embodiments will be apparent to those of skill in the art upon reading and understanding the above description. It should be noted that embodiments discussed in different portions of the description or referred to in different drawings can be combined to form additional embodiments of the present application. The scope should, therefore, be determined with reference to the appended claims, along with the full scope of equivalents to which such claims are entitled.

## Claims

1. A system (100; 200; 300) for cleaning a membrane (122; 322), wherein
the membrane (122; 322) includes at least one of a ceramic or polymeric membrane for filtering solids from fluid in a filtration system, the membrane having a clean side (124; 321) and a dirty side (126; 323);
the system further comprising at least a first supply of high pressure fluid (132; 232, 332) with dissolved gas therein;
the first supply of high pressure fluid (132; 232, 332) being in fluid communication with the clean side (124; 321) of the membrane (122; 322) during a cleaning process; and the dissolved gas in the high pressure fluid (132; 232, 332) being at a concentration such that gas releases, optionally in the form of bubbles, on the dirty side (126; 323) of the membrane (122; 322) during the cleaning process;
wherein the dissolved gas includes a first gas and the first gas is an oxidative gas.

2. The system (200; 300) as recited in claim 1, further comprising a source of cleaning reagent (220; 325) being selected to physically or chemically coact with the dirt accumulated at the membrane (122; 322) during the cleaning process.

3. The system (100; 200) as recited in any one of the preceding claims, comprising a second supply of high pressure fluid (142; 242) being selectively in fluid communication with the membrane (122), the second supply of high pressure fluid (142; 242) having low concentration of dissolved gas therein.

4. The system (100; 200; 300) as recited in any one of the preceding claims, wherein the first supply of high pressure fluid (132; 232; 332) with dissolved gas has a dissolved gas concentration greater than about 50% of solubility at high pressure conditions.

5. The system (100) as recited in any one of the preceding claims, further comprising a separation tank (180), the separation tank (180) downstream of the membrane (122) in a reverse flow path (104).

6. The system as recited in any one of the preceding claims, further comprising a transition control allowing for transition from the first supply of high pressure fluid to the second supply of high pressure fluid.

7. A method for cleaning a membrane (122; 322), the method comprising:
dissolving an oxidative gas into a first fluid in a first vessel (130; 230; 330) at a concentration in excess of the maximum solubility of the dissolved oxidative gas at an operating pressure present on a dirty side (126; 323) of the membrane (122, 322) during a cleaning process;
during the cleaning process, supplying the first fluid to a clean side (124; 321) of the membrane (122; 322) such that it passes through the membrane (122, 322) and oxidative gas releases, optionally in the form of bubbles, on the dirty side (126; 323) of the membrane (122; 322).

8. The method as recited in claim 7, further comprising introducing a second fluid with low amounts of dissolved gas through the membrane (122; 322), and at least partially replacing the first fluid.

9. The method as recited in any one of claims 7 and 8, wherein cleaning the membrane (122; 322) with the bubbles includes scouring the membrane (122; 322) with the bubbles.

10. The method as recited in any one of claims 7 to 9, further comprising sending the fluid to a separation tank (180) after cleaning the membrane (122), and floating dirt particles with attached gas and separating clean fluid from the dirt particles.

11. The method as recited in any one of claims 7 to 10, further comprising introducing a feed of coagulant chemicals including one or more of inorganic salts, organic polyelectrolyte chemicals.

12. The method as recited in any one of claims 7 to 11, further comprising recycling the fluid to an inlet near the membrane.

13. The method as recited in any one of claims 7 to 12, further comprising introducing one or more of low pressure ozone or ionized air, or pressurized gas with ozone, or pressurized ozone to the membrane (322).

14. The method according to any one of claims 7 to 13, comprising pressurizing the first fluid and/or the second fluid, respectively.
